(19) Europäisches Patentamt
European Patent Office
Office européen des brevets

(11) Veröffentlichungsnummer: **0 530 692 A2**

(12) **EUROPÄISCHE PATENTANMELDUNG**

(21) Anmeldenummer: **92114707.0**

(22) Anmeldetag: **28.08.92**

(51) Int. Cl.5: **C08L 71/12**, C08L 25/06, C08L 43/02, C08K 3/22, C08K 5/49

(30) Priorität: **06.09.91 DE 4129765**

(43) Veröffentlichungstag der Anmeldung: **10.03.93 Patentblatt 93/10**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Zeltner, Doris, Dr.**
**Viehtriftstrasse 94**
**W-6725 Roemerberg(DE)**
Erfinder: **Niessner, Norbert, Dr.**
**Buhl'scher Hof 10**
**W-6701 Friedelsheim(DE)**
Erfinder: **Seitz, Friedrich, Dr.**
**Von-Wieser-Strasse 1**
**W-6701 Friedelsheim(DE)**
Erfinder: **Neumann, Rainer, Dr.**
**Im Palmengarten 9**
**W-6704 Mutterstadt(DE)**
Erfinder: **Seelert, Stefan, Dr.**
**Albrecht-Duerer-Ring 23a**
**W-6710 Frankenthal(DE)**

(54) **Halogenfrei flammfest ausgerüstete thermoplastische Formmassen auf Basis von Polyphenylenethern und Polystyrol.**

(57) Halogenfrei flammfest ausgerüstete thermoplastische Formmassen auf Basis von Polyphenylenethern und Polystyrol, enthaltend als wesentliche Komponenten

A) 5 bis 92 Gew.-% mindestens eines Polyphenylenethers,
B) 5 bis 92 Gew.-% eines vinylaromatischen Polymerisates und
C) 3 bis 25 Gew.-% Flammschutzmittel auf der Basis von
C1) 20 bis 100 Gew.-% (bezogen auf die Gesamtmenge von C) einer polymeren Phosphorverbindung, die durch Polymerisation oder Copolymerisation mindestens einer Verbindung folgender Struktur erhalten wird:

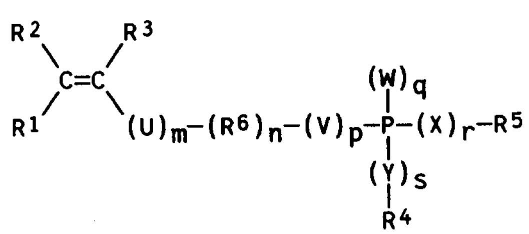

dabei bedeutet:

$R^6$ -

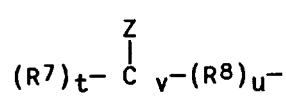

EP 0 530 692 A2

| | |
|---|---|
| $R^1,R^2,R^3,R^4,R^5,R^{10},R^{11}$ | - Wasserstoff, Alkyl, Cycloalkyl, Aralkyl oder Aryl, |
| $R^7,R^8,R^9$ | - Alkyliden, Cycloalkyliden, Aralkyliden oder Aryliden, |
| m,p,q,r,s,t,u,v | - 0 oder 1, |
| n | - 0, 1 oder 2, |
| U | - COO, O, S oder $NR^9$ |
| V,W,X,Y | - O, S oder $NR^9$ und |
| Z | - O, S oder $NR^{10}R^{11}$ |

C2) 0 bis 80 Gew.-% (bezogen auf die Gesamtmenge von C) einer niedermolekularen Phosphorverbindung aus der Gruppe der Phosphinoxide, Phosphate, Phosphinsäuren und deren Salzen und Estern, Phosphonsäuren und deren Salzen und Estern sowie roten Phosphor.

Die Erfindung betrifft halogenfrei flammfest ausgerüstete thermoplastische Formmassen auf Basis von Polyphenylenethern und Polystyrol, enthaltend als wesentliche Komponenten

A) 5 bis 92 Gew.-% mindestens eines Polyphenylenethers,

B) 5 bis 92 Gew.-% eines vinylaromatischen Polymerisates und

C) 3 bis 25 Gew.-% Flammschutzmittel auf der Basis von

C1) 20 bis 100 Gew.-% (bezogen auf die Gesamtmenge von C) einer polymeren Phosphorverbindung, die durch Polymerisation oder Copolymerisation mindestens einer Verbindung folgender Struktur erhalten wird:

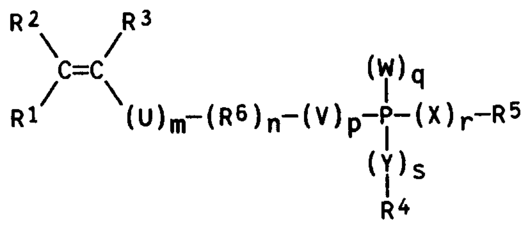

dabei bedeutet:

| | |
|---|---|
| $R^6$ | - 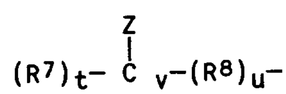 |
| $R^1$,$R^2$,$R^3$,$R^4$,$R^5$,$R^{10}$,$R^{11}$ | - Wasserstoff, Alkyl, Cycloalkyl, Aralkyl oder Aryl, |
| $R^7$,$R^8$,$R^9$ | - Alkyliden, Cycloalkyliden, Aralkyliden oder Aryliden, |
| m,p,q,r,s,t,u,v | - 0 oder 1, |
| n | - 0, 1 oder 2, |
| U | - COO, O, S oder $NR^9$, |
| V,W,X,Y | - O, S oder $NR^9$ und |
| Z | - O, S oder $NR^{10}$ |

C2) 0 bis 80 Gew.-% (bezogen auf die Gesamtmenge von C) einer niedermolekularen Phosphorverbindung aus der Gruppe der Phosphinoxide, Phosphate, Phosphinsäuren und deren Salzen und Estern, Phosphonsäuren und deren Salzen und Estern sowie roten Phosphor.

Des weiteren betrifft die Erfindung die Verwendung dieser Formmassen zur Herstellung von Folien und Formkörpern sowie die Formkörper, die unter Verwendung dieser Formmassen als wesentliche Komponenten erhältlich sind.

Flammgeschützte thermoplastische Formmassen die, gegebenenfalls schlägzäh modifizierte, Styrolpolymerisate und Polyphenylenether sowie ein phosphorhaltiges Flammschutzmittel enthalten, dienen zur Herstellung von technischen Formteilen, insbesondere von Fahrzeugteilen.

Polymermischungen aus Polyphenylenethern (PPE) und Styrolpolymerisaten, die niedermolekulare Phosphorverbindungen wie Phosphinoxide oder Phosphate enthalten, haben den Nachteil, daß bei der Verarbeitung dieser Massen das Flammschutzmittel teilweise ausschwitzt.

Um dieses unerwünschte Ausschwitzen zu vermeiden werden deswegen bevorzugt höhermolekulare Phosphorverbindungen als flammhemmende Mittel eingesetzt.

In der DE 30 02 792 werden Mischungen aus PPE und schlagzähmodifiziertem Polystyrol (HIPS) beansprucht, die als Flammschutzmittel einen aromatischen, thermoplastischen Polyphosphonsäureester enthalten. Diese Formmassen weisen jedoch aufgrund der Unverträglichkeit des Flammschutzmittels mit der Matrix schlechte mechanische Eigenschaften, insbesondere eine schlechte Zähigkeit auf (siehe auch Vergleichsbeispiel 4).

Formmassen aus PPE/HIPS mit erhöhter Feuerfestigkeit werden auch in der DE 28 23 167 beschrieben. Die Flammwidrigkeit ist auf den Einsatz von Blockcopolymeren aus Polyphenylenethern und phosphorhaltigen Verbindungen zurückzuführen. Die Herstellung des Blockcopolymerisates ist jedoch sehr aufwendig und die resultierende Brandschutzwirkung relativ gering.

In der EP 147 724 werden flammfeste Formmassen aus PPE und einem alternierenden Copolymerisat aus Styrol und einer Phosphorverbindung beschrieben, die durch Umsetzung eines durch anionische

Polymerisation erhaltenen Styroldianions mit einer Halogen-Phosphor-Verbindung erhalten werden. Nachteilig an dieser Methode ist die aufwendige Herstellung des phosphorhaltigen Styrolpolymerisates.

Die US 4 371 672 beansprucht Formmassen aus PPE und einem Copolymeren, das durch Polymerisation einer phosphorylierten vinylaromatischen Verbindung erhalten wird. Die Herstellung des phosphorylierten, vinylaromatischen Monomeren erfordert jedoch einen hohen Aufwand.

Aufgabe der vorliegenden Erfindung war es daher flammgeschützte, halogenfreie Formmassen auf Basis von PPE und HIPS mit einer einfach zugänglichen, nicht ausschwitzenden Flammschutzausrüstung zu entwickeln.

Demgemäß wurden die eingangs definierten halogenfreien, flammgeschützten, thermoplastischen Formmassen gefunden.

Im einzelnen haben die Komponenten der erfindungsgemäßen Formmassen die folgende Bedeutung:

Komponente A:

Die in Betracht kommenden Polyphenylenether (PPE) sind bekannt. Sie werden vorzugsweise durch oxidative Kupplung von in ortho-Stellung ein- oder zweifach substituierten Phenolen hergestellt (vgl. US-A 3 661 848, 3 378 505, 3 306 874, 3 306 875 und 3 639 656) und werden in Mengen von 5 bis 92 Gew.-%, bevorzugt in Mengen von 25 bis 75 Gew.-%, eingesetzt.

Als Beispiele für Substituenten sind Halogenatome wie Chlor oder Brom oder Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu vier Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind
Poly(2,6-dilauryl-1,4-phenylen)ether,
Poly(2,6-diphenyl-1,4-phenylen)ether,
Poly(2,6-dimethoxi-1,4-phenylen)ether,
Poly(2,6-diethoxi-1,4-phenylen)ether,
Poly(2-methoxi-6-ethoxi-1,4-phenylen)ether,
Poly(2-ethyl-6-stearyloxi-1,4-phenylen)ether,
Poly(2,6-dichlor-1,4-phenylen)ether,
Poly(2-methyl-6-phenyl-1,4-phenylen)ether,
Poly(2,6-dibenzyl-1,4-phenylen)ether,
Poly(2-ethoxi-1,4-phenylen)ether,
Poly(2-chlor-1,4-phenylen)ether,
Poly(2,5-dibrom-1,4-phenylen)ether.

Bevorzugt werden Polyphenylenether eingesetzt, bei denen die Substituenten Alkylreste mit 1 bis 4 Kohlenstoffatomen sind, wie
Poly(2,6-dimethyl-1,4-phenylen)ether,
Poly(2,6-diethyl-1,4-phenylen)ether,
Poly(2-methyl-6-ethyl-1,4-phenylen)ether,
Poly(2-methyl-6-propyl-1,4-phenylen)ether,
Poly(2-6-dipropyl-1,4-phenylen)ether,
Poly(2-ethyl-6-propyl-1,4-phenylen)ether,
Besonders geeignet ist Poly(2,6-dimethyl-1,4-phenylen)ether.

Weiterhin sind Pfropfcopolymere aus Polyphenylenethern und vinylaromatischen Polymeren wie Styrol, $\alpha$-Methylstyrol, Vinyltoluol und Chlorstyrol geeignet.

Die nach einem solchen Verfahren hergestellten Polyphenylenether weisen im allgemeinen eine Grenzviskosität von 0,2 bis 0,7 dl/g auf, gemessen in Chloroform bei 25 °C). Dies entspricht einem Gewichtsmittel des Molekulargewichtes ($\overline{M}_w$) von 10 000 bis 60 000.

Komponente B:

Als Polyvinylaromaten werden sowohl Homo- und Copolymerisate als auch schlagzäh modifizierte Polymerisate von vinylaromatischen Verbindungen in Mengen von 5 bis 92 Gew.-%, bevorzugt in Mengen von 25 bis 75 Gew.-%, eingesetzt.

Als vinylaromatische Verbindungen kommen dabei insbesondere Styrol in Betracht, ferner die kern- oder seitenkettenalkylierten Polystyrole. Vorzugsweise wird jedoch Styrol allein verwendet.

Die Homopolymerisate werden dabei nach den bekannten Verfahren in Masse, Lösung oder Suspension hergestellt (vgl. Ullmanns Encyclopädie der Technischen Chemie, Band 19, Seiten 265 - 272, Verlag Chemie Weinheim 1980). Die Homopolymerisate weisen im allgemeinen Gewichtsmittel des Molekulargewichts ($\overline{M}_w$) von 1 000 bis 300 000 auf.

Als Comonomere zur Herstellung von Copolymerisaten kommen z.B. (Meth)acrylsäure, (Meth)-acrylsäureester mit 1 bis 4 C-Atomen im Alkylrest, Acrylnitril und Maleinsäureanhydrid sowie Maleinsäureimide in Betracht. Die Comonomere können je nach ihrer Struktur in unterschiedlichen Mengen in den Styrolpolymerisaten enthalten sein.

Entscheidend für den Gehalt an Comonomeren im Mischpolymerisat ist die Mischbarkeit des Copolymerisats mit dem Polyphenylenether. Solche Mischungsgrenzen sind bekannt und beispielsweise in den US-Patentschriften 4 360 618 und 4 405 753 und in der Veröffentlichung von J. R. Fried, G. A. Hann, Polym. Eng. Sci. 22, S. 705 (1982) beschrieben. Die Herstellung der Comonomeren erfolgt nach bekannten Verfahren, die beispielsweise in Ullmanns Encyclopädie der technischen Chemie (siehe oben) beschrieben sind. Die Copolymerisate haben im allgemeinen Gewichtsmittel des Molekulargewichts ($\overline{M}_w$) von 10 000 bis 300 000.

Das bevorzugt eingesetzte schlagfest modifiziertem Polystyrol wird durch Polymerisation von Styrol in Gegenwart eines Kautschuks hergestellt.

Die meist angewandten Verfahren zur Herstellung schlagzähmodifizierter Styrolpolymerisate sind die Polymerisation in Masse oder in Lösung in Gegenwart eines Kautschuks, wie sie beispielsweise in der US-Patentschrift 2 694 692 beschrieben sind, und Verfahren zur Massesuspensionspolymerisation, wie sie beispielsweise in der US-Patentschrift 2 862 906 beschrieben sind. Selbstverständlich sind auch andere Verfahren anwendbar.

Als Kautschuk bei schlagfest modifiziertem Polystyrol wird üblicherweise natürlicher oder synthetischer Kautschuk eingesetzt. Geeignete Kautschuke sind Naturkautschuk, Polybutadien-, Polyisopren-, Polybuten, Polyoctenylen-, Acrylnitrilbutadien-, Ethylenpropylen-, Polyester- und Ethylenkautschuke. Auch Pfropfkautschuke mit einem Pfropfkern aus Butadien, Isopren oder Alkyl(meth)acrylaten und einer Pfropfhülle aus Styrol und/oder α-Methylstyrol sowie Mischpolymerisate des Butadiens und/oder des Isoprens mit Styrol und anderen Comonomeren, die eine Glastemperatur von unter -20 °C besitzen (K.H.Illers, H.Breuer, Kolloidzeitschrift 190 (1), S. 16-34 (1963)). Besonders eignen sich Butadienpolymerisate mit einem 1,4-cis-Gehalt, der zwischen 25 und 99 Gew.-% liegt. Es können aber auch Acrylatkautschuke, EPDM-, Polybutylen- und Polyoctenamerkautschuke eingesetzt werden.

Üblicherweise besitzen die schlagzähmodifizierten Styrolpolymerisate einen Weichkomponentenanteil von 3 bis 30, vorzugsweise von 4 bis 14 Gew.-%.

Komponente C:

Als Flammschutzmittel wird eine polymere Phosphorverbindung C1 und gewünschtenfalls eine niedermolekulare Phosphorverbindung C2 verwendet. C1 wird üblicherweise durch radikalische Polymerisation mindestens eines phosphorhaltigen Monomeren der folgenden Struktur mit sich selbst oder mit bis zu 80, bevorzugt mit bis zu 60 und besonders bevorzugt mit bis zu 50 Gew.-% (bezogen auf C), eines vinylaromatischen Monomeren erhalten.

Die polymeren Phosphorverbindungen sind solche, die durch Polymerisation oder Copolymerisation mindestens einer Verbindung folgender Struktur erhalten werden:

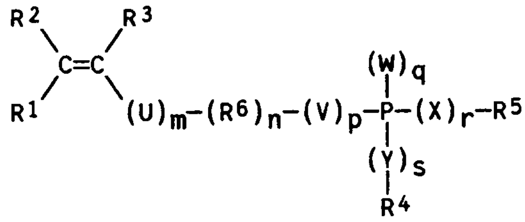

dabei bedeutet:

| | |
|---|---|
| $R^6$ | - 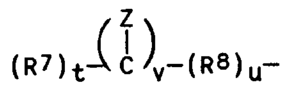 |
| $R^1,R^2,R^3,R^4,R^5,R^{10}$ | - Wasserstoff, Alkyl vorzugsweise mit 1 bis 8, insbesondere 1 bis 4 C-Atomen, Cycloalkyl vorzugsweise mit 4 bis 12, insbesondere 6 bis 8 C-Atomen, Aralkyl mit vorzugsweise Alkyl mit 1 bis 4 C-Atomen oder Aryl mit 6 bis 12 C-Atomen, vorzugsweise Phenyl oder mit $C_1$-$C_6$-Alkyl subst. Phenyl, |
| $R^7,R^8,R^9$ | - Alkyliden, Cycloalkyliden, Aralkyliden oder Aryliden, vorzugsweise $C_1$-$C_8$-Alkyliden, insbesondere $C_1$-$C_4$-Alkyliden, $C_6$-$C_{12}$-, insbesondere $C_6$-$C_8$-Cycloalkyliden und $C_6$-$C_{12}$-Aryliden, vorzugsweise Phenyliden oder mit $C_1$-$C_6$-Alkyl substituiertes Phenyliden, |
| m,p,q,r,s,t,u,v | - 0 oder 1, |
| n | - 0, 1 oder 2, |
| U | - COO, O, S oder $NR^9$, vorzugsweise COO |
| V,W,X,Y | - O, S oder $NR^9$, vorzugsweise O oder $NR^9$ und |
| Z | - O, S oder $NR^{10}$, vorzugsweise O oder $NR^{10}$ |

Besonders bevorzugt sind $R^4$ und $R^5$ Aryl, insbesondere Phenyl oder H, U = COO, n und v haben den Wert O und Y, V und W sind Sauerstoff. Entsprechende Verbindungen haben beispielsweise folgenden Aufbau:

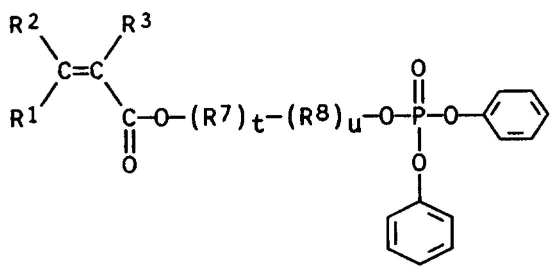

Ein besonders bevorzugter Vertreter hiervon ist Diphenyl-α-methacryloyloxyethylphosphat.

Als vinylaromatische Comonomere kommt insbesondere Styrol, ferner kern- oder seitenkettenalkylierte Styrole in Betracht. Bevorzugt ist jedoch Styrol.

Zur Herstellung der Komponente C1 können alle üblichen Polymerisationsmethoden wie Emulsionspolymerisation, Suspensionspolymerisation, Polymerisation in Masse oder Polymerisation in Lösung verwendet werden. Bevorzugt ist die Emulsionspolymerisation oder die Polymerisation in Lösung.

Die Technik der Emulsionspolymerisation ist an sich bekannt und z.B. beschrieben in Ullmanns Enzyklopädie der technischen Chemie, 4. Auflage (1980), Band 19, S. 132-145; Encyclopedia of Polymer Science and Engineering, First Edition, Band 5, S. 801-859; Encyclopedia of Polymer Science and Engineering, Second Edition, Band 6, S. 1-51.

Dabei wird üblicherweise mit Feststoffgehalten zwischen 5 und 75 Vol.-% gearbeitet, vorzugsweise zwischen 10 und 65 Vol.-%. Als Polymerisationsinitiatoren werden üblicherweise Substanzen wie Kaliumpersulfat, Natriumpersulfat, organische Peroxide und Azoverbindungen eingesetzt.

Es können anionische, kationische und amphotere Emulgatoren verwendet werden.

Bei der kontinuierlichen Polymerisation in Lösung wird das Polymere aus der monomeren Phosphorverbindung und gewünschtenfalls dem vinylaromatischen Monomeren bei Temperaturen von 50 bis 150°C unter starkem Rühren hergestellt. Geeignete Lösungsmittel sind z.B. Benzol, Toluol, Xylol und Ethylbenzol. Die Monomeren können dazu kontinuierlich in das Reaktionsgefäß eingebracht und das Polymere ebenso kontinuierlich aus dem Reaktionsansatz entfernt werden.

Der Polymerisationsansatz kann zu 100 Gew.-% aus dem phosphorhaltigen Monomeren bestehen oder auch bis zu 80 Gew.-% der vinylaromatischen Monomeren enthalten. Bevorzugt wird ein Copolymeres aus 40 bis 60 Gew.-% phosphorhaltiger Verbindung und 40 bis 60 Gew.-% Styrol.

Als phosphorhaltige Verbindungen C2) kommen Phosphinoxide, Phosphate, Phosphinsäuren und deren Salze und Ester, Phosphonsäuren und deren Salze und Ester sowie roter Phosphor sowie deren Mischungen in Frage.

Bevorzugt sind Triarylphosphate und Triarylphosphinoxide. Besonders bevorzugt sind Triphenylphosphat und Triphenylphosphinoxid.

Die Komponente C2) ist in C) bis zu maximal 80 Gew.-% enthalten. Bevorzugt sind allerdings Anteile von kleiner 50 Gew.-%.

Die erfindungsgemäßen Mischungen aus den Komponenten A, B und C können zur weiteren Verbesserung ihrer Eigenschaften Additive wie Gleit- und Schmiermittel, Entformungsmittel, Antioxidantien, Licht- und Hitzestabilisatoren, Farbstoffe und Pigmente sowie mineralische Verstärkungsmaterialien wie Glaskugeln, Glasfasern, Mineralfasern, Whisker und Glimmer enthalten, wie sie für derartige Polymerisate üblich sind.

Es können davon bis zu 50 Gew.-%, bevorzugt bis zu 30 Gew.-%, bezogen auf das Gesamtgewicht der Formmasse eingearbeitet werden.

Die Herstellung der erfindungsgemäßen thermoplastischen Formmassen erfolgt zweckmäßigerweise durch Mischen der Komponenten bei Temperaturen im Bereich von 200 bis 350°C, vorzugsweise bei 250 bis 300°C, in üblichen Mischvorrichtungen wie Knetern, Banbury-Mischern, Ein- und Zweischneckenextrudern. Bevorzugt werden Zweischneckenextruder, da eine intensive Durchmischung wünschenswert ist. Die Mischzeiten liegen im allgemeinen zwischen 0,5 und 30 Minuten, vorzugsweise zwischen 1 und 5 Minuten. Je nach Bedarf können die Formmassen z.B. zu Granulaten, Pulvern, Preßlingen, Platten oder Bahnen verarbeitet werden. Die Reihenfolge des Mischens der einzelnen Komponenten kann variiert werden, es können ausgewählte Komponenten vorgemischt werden oder es können alle Komponenten gemeinsam gemischt werden.

Die erfindungsgemäßen thermoplastischen Formmassen besitzen eine gute Flammfestigkeit bei guter Zähigkeit und hoher Wärmeformbeständigkeit. Die verwendeten Flammschutzmittel sind leicht zugänglich.

Aufgrund ihrer guten Verarbeitungseigenschaften eignen sie sich gut zur Herstellung von Formteilen aller Art, z.B. durch Spritzguß oder Extrudieren. Sie können auch zur Herstellung von Folien und Halbzeugen im Tiefzieh- oder Blasverfahren dienen.

Beispiele

Mischungen von jeweils etwa 4 kg wurden auf einem Zweischneckenextruder der Firma Werner & Pfleiderer, Modell ZSK 30 bei 280°C Massetemperatur hergestellt. Aus den konfektionierten Produkten wurden bei 280°C spritzgegossene Prüfkörper gefertigt und daran folgende Kennzahlen gemessen:

- Brandverhalten nach UL 94 (Underwriter Laboratories), Einordnung in UL 94 V-0, UL 94 V-1 oder UL 94 V-2,
- Durchstoßarbeit (DSTA), Durchstoßtest nach DIN 53 443
- Erweichungstemperatur (Vicat) in °C bei einer Belastung von 49,05 N und einem Temperaturgradienten von 50 K/Std. nach DIN 53 460.

Anhand von Spritzgußversuchen wurde die Bildung eines Formbelags bzw. das Ausschwitzen des Flammmschutzmittels beurteilt.

Komponente A (Polyphenylenether)

Poly-2,6-dimethyl-1,4-phenylen-ether mit einer Grenzviskosität von 0,50 dl/g (gemessen in Chloroform bei 25°C);

Komponente B (Polystyrol)

B1) Schlagzähes Polystyrol mit 9 Gew.-% Polybutadien als Kautschukanteil, Kapselteilchenmorphologie und einer mittleren Teilchengröße ($d_{50}$) von ca. 0,3 µm (Polystyrol 525 K der Fa. BASF);
B2) Schlagzähes Polystyrol mit 8 Gew.-% Polybutadien als Kautschukanteil, Zellteilchenmorphologie und einer mittleren Teilchengröße ($d_{50}$) von ca. 2,8 µm (Polystyrol 476 L der Fa. BASF).

Komponente C (Flammschutzmittel)

C1,1) Bei 65°C wurde zu 3350 g Wasser, 6,7 g Kaliumpersulfat, 8,4 g Natriumhydrogencarbonat und 55,5 g Natriumalkylsulfonat (K30 der Fa. Bayer) eine Mischung von 106 g Styrol und 106 g Diphenyl-α-methacryloyloxyethylphosphat gegeben. Die Mischung wurde 15 Minuten polymerisiert. Dann wurde innerhalb von 3 Stunden eine Mischung aus 954 g Styrol und 954 g Diphenyl-α-methacryloyloxyethylphosphat zugetropft und für 2 Stunden nachgerührt. Es wurde nochmals 1 g Kaliumpersulfat zugegeben und 1 Stunde bei 70°C gerührt. Das Polymere wurde nach dem Abkühlen ausgefällt.
Diphenyl-α-methacryloyloxyethylphosphat ist als Verkaufsprodukt von der Fa. Daihachi erhältlich. Es wird durch Kondensation von Methacrylsäure und Oxyethyl-diphenylphosphat hergestellt.
C1,2) Wie C1,1, jedoch wurde auf Styrol als Comonomeres verzichtet und ausschließlich Diphenyl-α-methacryloyloxyethylphosphat polymerisiert.
C1,3) Für Vergleichsversuche wurde ein Poly(3,3',5,5'-tetramethyl-bis-phenylen-A-phenylphosphonat) eingesetzt. Das Phosphonat wurde durch Aufschmelzen eines Gemisches aus equimolaren Teilen von Phenylphosphonsäuredichloridund Tetramethylbisphenol-A (2,2-Bis-(4-hydroxy-3,5-dimethyl-phenyl)-propan) gemäß der Lehre der DE 30 02 792 hergestellt.
C2) Triphenylphosphinoxid

Die Zusammensetzung der erfindungsgemäßen Einstellungen sowie die der Vergleichsbeispiele zeigt Tabelle 1. Tabelle 2 zeigt die Eigenschaften der jeweiligen Formmassen.

Tabelle 1

| Zusammensetzung der Formmassen | | | | | | |
|---|---|---|---|---|---|---|
| | Komp . A (Gew.-%) | Komp. B (Gew.-%) | | Komp. C1 (Gew.-%) | | Komp. C2 (Gew.-%) |
| Beispiel 1 | 55 | B1 | 36 | C1,1 | 4,5 | 4,5 |
| Beispiel 2 | 43 | B2 | 43 | C1,2 | 14,0 | - |
| Beispiel 3 | 65 | B1 | 28 | C1,1 | 3,0 | 4,0 |
| Beispiel 4* | 43 | B2 | 43 | C1,3 | 14,0 | - |
| Beispiel 5* | 65 | B1 | 28 | - | | 7,0 |

Tabelle 2

| Eigenschaften der Formmassen | | | | |
|---|---|---|---|---|
| Beispiel | Vicattemperatur (°C) | DSTA (Nm) | Brandklasse nach UL 94 | Formbelag/Ausschwitzen |
| 1 | 143 | 50 | V-1 | nein |
| 2 | 134 | 54 | V-0 | nein |
| 3 | 154 | 49 | V-1 | nein |
| 4* | 132 | 27 | V-1 | nein |
| 5* | 135 | 46 | V-1 | ja |

4*, 5* sind Vergleichsbeispiele

## Patentansprüche

1. Halogenfrei flammfest ausgerüstete thermoplastische Formmassen auf Basis von Polyphenylenethern und Polystyrol, enthaltend als wesentliche Komponenten

A) 5 bis 92 Gew.-% mindestens eines Polyphenylenethers,
B) 5 bis 92 Gew.-% eines vinylaromatischen Polymerisates und
C) 3 bis 25 Gew.-% Flammschutzmittel auf der Basis von
C1) 20 bis 100 Gew.-% (bezogen auf die Gesamtmenge von C) einer polymeren Phosphorverbindung, die durch Polymerisation oder Copolymerisation mindestens einer Verbindung folgender Struktur erhalten wird:

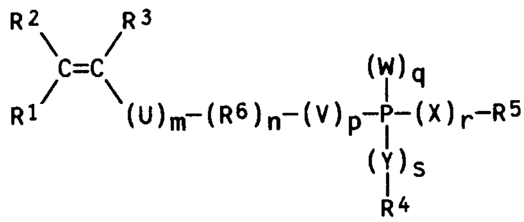

dabei bedeutet:

$R^6$ -

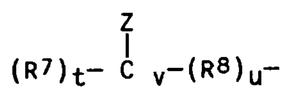

| | |
|---|---|
| $R^1$,$R^2$,$R^3$,$R^4$,$R^5$,$R^{10}$,$R^{11}$ | - Wasserstoff, Alkyl, Cycloalkyl, Aralkyl oder Aryl, |
| $R^7$,$R^8$,$R^9$ | - Alkyliden, Cycloalkyliden, Aralkyliden oder Aryliden, |
| m,p,q,r,s,t,u,v | - 0 oder 1, |
| n | - 0, 1 oder 2, |
| U | - COO, O, S oder $NR^9$ |
| V,W,X,Y | - O, S oder $NR^9$ und |
| Z | - O, S oder $NR^{10}R^{11}$ |

C2) 0 bis 80 Gew.-% (bezogen auf die Gesamtmenge von C) einer niedermolekularen Phosphorverbindung aus der Gruppe der Phosphinoxide, Phosphate, Phosphinsäuren und deren Salzen und Estern, Phosphonsäuren und deren Salzen und Estern sowie roten Phosphor.

**2.** Thermoplastische Formmassen nach Anspruch 1, dadurch gekennzeichnet, daß die Phosphorverbindung C1) mit bis zu 80 Gew.-% (bezogen auf die Gesamtmenge von C) einer vinylaromatischen Verbindung copolymerisiert ist.

**3.** Verwendung von thermoplastischen Formmassen gemäß den Ansprüchen 1 und 2 zur Herstellung von Folien und Formkörpern.

**4.** Folien und Formkörper erhältlich aus thermoplastischen Formmassen gemäß den Ansprüchen 1 und 2.